# EUROPÄISCHE PATENTANMELDUNG

(11) **EP 3 070 382 A1**
(43) Veröffentlichungstag der Anmeldung: **21.09.2016**
(21) Anmeldenummer: 16161085.2
(22) Anmeldetag: 18.03.2016
(51) Int. Cl.: F16K 31/40, F16K 31/06

(54) **SERVOVENTIL**

(30) Priorität: 20.03.2015 DE 102015104259
(71) Anmelder: A. u. K. Müller GmbH & Co. KG, 40595 Düsseldorf (DE)
(72) Erfinder: ARNDT, Wolfgang, 40764 Langenfeld (DE)
(74) Vertreter: Feder Walter Ebert

(57) **Zusammenfassung**

Die Erfindung betrifft ein Ventil, insbesondere ein Servoventil, mit einem zum Schalten eines Hauptventils vorgesehen Vorsteuerventil (3), das einen über ein axial bewegbar angeordnetes Schließelement (3.1) verschließbaren Vorsteuerventilsitz (3.2) aufweist, wobei das Schließelement (3.1) über ein Koppelelement (3.3) mit einem Betätigungselement (3.4) gekoppelt ist, bei welchem vorgesehen ist, dass das Koppelelement (3.3) außermittig gegenüber dem Vorsteuerventilsitz (3.2) angeordnet ist.

## Beschreibung

Die vorliegende Erfindung betrifft ein Ventil, insbesondere ein Servoventil, mit einem zum Schalten eines Hauptventils vorgesehenen Vorsteuerventil, das einen über ein axial bewegbar angeordnetes Schließelement verschließbaren Vorsteuerventilsitz aufweist, wobei das Schließelement über ein Koppelelement mit einem Betätigungselement gekoppelt ist.

Derartige Ventile werden in vielen Bereichen der Technik, beispielsweise in sanitären Einrichtung oder ähnlichen Vorrichtungen zur Steuerung von Fluidströmen und insbesondere von Wasserströmen eingesetzt.

Hierzu ist ein Hauptventil größeren Strömungsquerschnitts vorgesehen, das zwischen einer Offen- und einer Schließstellung hin und her geschaltet werden kann. Zum Schalten des Hauptventils werden Vorsteuerventile kleineren Strömungsquerschnitts eingesetzt, über welche sich das deutlich größere Hauptventil mit vergleichsweise geringem Kraftaufwand schalten lässt.

Dabei wird zum Schalten des Hauptventils der Druck des in dem Hauptventil strömenden Fluids ausgenutzt, weshalb diese Ventile auch als eigenmediumbetätigte Ventile bezeichnet werden. Bei solchen eigenmediumbetätigten Ventilen wird der am Ventileinlass des Hauptventils anliegende Druck in eine Vorsteuerventilkammer des Vorsteuerventils geführt. Durch Öffnen des Vorsteuerventils kann das Medium aus der Vorsteuerventilkammer in Richtung des Auslasses des Hauptventils entweichen. Hierdurch ergeben sich geänderte Druckverhältnisse, aufgrund derer sich auch das Hauptventil öffnet. Durch Öffnen und Schließen des Vorsteuerventils lässt sich das wesentlich größere Hauptventil daher durch Ausnutzung der sich hierdurch ändernden Druckverhältnisse zwischen dessen Offenund Schließstellung mit vergleichsweise geringem Energiebedarf schalten.

Das Öffnen bzw. Schließen des Vorsteuerventils erfolgt durch ein gegenüber dem Vorsteuerventilsitz axial bewegbar angeordnetes Schließelement. Zum Bewegen des Schließelements ist dieses über ein Koppelelement mit einem axial bewegbaren Betätigungselement verbunden, welches häufig von einem über ein Spulensystem bewegbaren Plunger gebildet wird.

Ein solches Ventil ist beispielsweise aus der DE 10 2011 050 617 A1 bekannt. Das Schließelement wird gebildet von einem oberhalb des Vorsteuerventilsitz axial bewegbar angeordneten Element aus gummielastischem Material und ist über ein mit diesem formschlüssig verbundenen, als Koppelelement dienenden Zapfen mit dem über ein Spulensystem bewegbaren Betätigungselement verbunden. Das Schließelement und das Koppelelement sind symmetrisch sowohl zur Mittelachse des Betätigungselements als auch zur Mittelachse des Vorsteuerventilsitzes angeordnet.

Zum Schließen des Vorsteuerventils wird das Schließelement über das Koppelelement von oben her mit einer Federkraft beaufschlagt und hierdurch in der Schließstellung mit einer vorgegebenen Kraft dichtend auf den Vorsteuerventilsitz des Vorsteuerventils gedrückt.

Die Federkraft entspricht dabei einer vorgegebenen Schließkraft des Vorsteuerventils und wird über eine mechanische Druckfeder bereitgestellt, die das Schließelement in Richtung dessen Schließstellung mittig auf den Vorsteuerventilsitz drückt. Beim Öffnen des Ventils wird das Betätigungselement und mit diesem das Koppelelement und das Schließelement entgegen der Kraft dieser Feder in die Offenstellung bewegt. Hierzu wird das Spulensystem elektrisch bestromt und das Betätigungselement entgegen der Kraft der Feder in Richtung der Offenstellung des Vorsteuerventils bewegt.

Die hierzu erforderliche elektrische Energie wird von einer oder mehreren Batterien bereitgestellt, die nach einer gewissen Einsatzdauer des Ventils entladen sind und gegen eine neue Batterie ersetzt werden müssen.

Aufgabe der vorliegenden Erfindung ist es, ein Ventil anzugeben, welches sich beim Schalten des Vorsteuerventils durch einen verringerten Energiebedarf auszeichnet.

Zur Lösung dieser Aufgabe wird bei einem Ventil der eingangs genannten Art vorgeschlagen, dass das Koppelelement außermittig gegenüber dem Vorsteuerventilsitz angeordnet ist.

Durch die außermittige Anordnung des Koppelelements gegenüber dem Vorsteuerventilsitz kann das Vorsteuerventil mit geringerem Energiebedarf geschaltet werden. Die dem Ventilsitz abgewandte Seite des Schließelements kann vom Fluid mittig überströmt werden. Da dieses Fluid den Druck des anliegenden Mediums aufweist und unterhalb des Schließelements im Bereich des Vorsteuerventilsitzes ein geringerer Druck herrscht, wird das Schließelement dieser Druckdifferenz folgend über das Fluid von oben her gegen den Ventilsitz gedrückt. Diese Kraft ist auch von den unterschiedlichen Flächen abhängig und addiert sich mit der über die Feder aufgebrachten Federkraft zu der vorgegebenen Schließkraft. Insoweit muss nicht die gesamte Schließkraft von der Feder aufgebracht werden. Die Feder kann kleiner dimensioniert werden. Dies bringt den Vorteil mit sich, dass das über das Spulensystem erfolgende Öffnen des Vorsteuerventils entgegen einer geringeren Federkraft und damit einhergehend mit einem geringeren Energieaufwand erfolgen kann.

Eine vorteilhafte Ausgestaltung sieht vor, dass das Koppelelement neben der Mittelachse des Vorsteuerventilsitzes angeordnet ist. Der Bereich der Mittelachse des Vorsteuersitzes kann daher auf der dem Ventilsitz gegenüberliegenden Seite des Schließelements von dem Fluid überströmt werden.

In diesem Zusammenhang ist es im Hinblick auf eine möglichst große von dem Fluid überströmte, als Druckfläche dienende Fläche ferner von Vorteil, wenn das Koppelelement neben der Öffnung des Vorsteuerventilsitzes und noch vorteilhafter neben dem Vorsteuerventilsitz angeordnet ist. Auf diese Weise kann der gesamte Bereich oberhalb der Öffnung und vorteilhafter oberhalb des gesamten Vorsteuerventilsitzes überströmt und das Schließelement in diesem Bereich großflächig gegen den Ventilsitz gedrückt werden.

Eine konstruktiv vorteilhafte Ausgestaltung sieht vor, dass das Schließelement eine scheibenförmige Geometrie aufweist. Alternativ kann auch eine plattenförmige Geometrie des Schließelements vorgesehen sein. Die Unterseite des scheiben- oder plattenförmigen Schließelements kann gegen den Vorsteuerventilsitz anliegen, die Oberseite des scheiben- oder plattenförmigen Schließelements kann von dem Medium überströmt werden. Die scheiben- oder plattenförmige Geometrie des Schließelements erlaubt aufgrund der flachen Bauweise eine kompakte Vorsteuerventilkammer.

Vorteilhaft ist ferner eine Ausgestaltung, bei welcher das Koppelelement in einem Randbereich des Schließelements angeordnet ist. Durch die randseitige Anordnung kann der mittige Bereich überströmt und gegen den Ventilsitz gedrückt werden.

Eine weitere vorteilhafte Ausgestaltung des Schließelements sieht vor, dass das Schließelement ein insbesondere als Stützscheibe ausgebildetes Stützelement und ein Dichtelement aufweist. Die Stützscheibe kann aus einem härteren und das Dichtelement aus einem weicheren Material bestehen. Beispielsweise kann die Stützscheibe aus einem Kunststoff- und das Dichtelement aus einem Gummimaterial bestehen. Vorteilhaft befindet sich das Dichtelement auf der dem Vorsteuerventilsitz zugewandten Seite des Schließelements. Das Dichtelement kann mit dem Stützelement lösbar verbunden sein, insbesondere durch eine Steckverbindung.

Eine weitere vorteilhafte Ausgestaltung sieht vor, dass das Koppelelement mit der Stützscheibe insbesondere einstückig verbunden ist. Die über das Betätigungselement auf das Schließelement aufgebrachte Schließkraft lässt sich gleichmäßig über die aus einem härteren Material bestehende Stützscheibe in das darunter liegende Dichtelement einleiten. Wenn beide Teile aus einem Stück bestehen ergeben sich zudem fertigungstechnische Vorteile.

Eine weitere Ausgestaltung sieht vor, dass das Koppelelement einstückig mit dem Betätigungselement und dem Schließelement verbunden ist. Die einstückige Verbindung erlaubt eine einfache, die Anzahl der Montageschritte gering haltende Herstellung. Alternativ ist aber auch eine mehrstückige Verbindung möglich.

Eine weitere Ausgestaltung sieht vor, dass die Betätigungsachse des Betätigungselements versetzt gegenüber der Mittelachse des Vorsteuerventils angeordnet ist. Durch den Achsversatz zwischen Betätigungsachse und Mittelachse kann auf konstruktiv günstige Weise eine außermittige Anordnung des Koppelelements gegenüber dem Vorsteuerventilsitz erreicht werden. Die Achse des Vorsteuerventils und des Vorsteuerventilsitzes können entsprechend gegeneinander versetzt angeordnet sein.

In diesem Zusammenhang ist es ferner von Vorteil, wenn das Koppelelement und das Schließelement quer zueinander ausgerichtet sind. Beispielsweise können das Schließelement und das Betätigungselement einen Winkel zueinander einschließen. Der Winkel kann insbesondere 90° betragen.

Eine alternative Ausgestaltung sieht vor, dass die Betätigungsachse des Betätigungselements mit der Mittelachse des Vorsteuerventilsitzes fluchtet. Auf diese Weise ergibt sich eine symmetrische Anordnung der Bauteile des Vorsteuerventils.

In diesem Zusammenhang ist es von konstruktivem Vorteil, wenn dass das Koppelelement über ein sich von dem Koppelelement in Richtung des Betätigungselements erstreckendes Verbindungselement mit dem Betätigungselement verbunden ist. Auch diese Verbindung kann ein- oder mehrstückig ausgeführt sein.

In diesem Zusammenhang ist es ferner von Vorteil, wenn das Koppelelement gemeinsam mit dem Schließelement und dem Verbindungselement einen U-förmigen Querschnitt aufweist.

Eine weitere vorteilhafte Ausgestaltung sieht vor, dass das Schließelement innerhalb einer Vorsteuerventilkammer bewegbar angeordnet ist. Innerhalb der Vorsteuerventilkammer kann der am Ventileinlass des Hauptventils anliegende Druck herrschen. Dieser kann zum Öffnen und Schließen des Vorsteuerventils und damit zum Schalten des Hauptventils genutzt werden.

Eine weitere vorteilhafte Ausgestaltung sieht vor, dass die Vorsteuerventilkammer über ein Dichtelement abgedichtet und das Kopplungselement durch das Dichtelement hindurchgeführt ist. Auf diese Weise kann das Betätigungselement in einem trockenen Bereich des Ventils angeordnet und dessen Bewegungen über das Kopplungselement in die vom Medium durchströmte Vorsteuerventilkammer geführt werden. Das Betätigungselement kann dabei schiebbeweglich durch das Dichtelement hindurchgeführt sein. In diesem Fall kann es sich um eine Dichtscheibe handeln, welche eine axiale Durchführung für das Betätigungselement aufweist. Alternativ kann es sich bei dem Dichtelement auch um eine Membrane handeln, welche am Umfang des Betätigungselements befestigt ist. In diesem Fall verformt sich die Membrane entsprechend der Bewegungen des Betätigungselements.

Darüber hinaus wird in konstruktiver Weiterbildung vorgeschlagen, dass das Betätigungselement ein bistabil angeordneter Plunger ist, der über ein Spulensystem und eine Feder zwischen zwei Endlagen hin und her schaltbar ist. Alternativ kann es sich aber auch um ein Betätigungselement in monostabiler Bauweise handeln.

Schließlich wird ferner vorgeschlagen, dass das Betätigungselement außerhalb der Vorsteuerkammer in einem trockenen Bereich des Vorsteuerventils angeordnet ist, wodurch sich die vom Medium durchströmten Volumina reduzieren und Stagnationswasserbereiche vermeiden lassen.

Weitere Vorteile und Einzelheiten eines erfindungsgemäßen Ventils werden nachfolgend unter Zuhilfenahme der beigefügten Zeichnungen zweier Ausführungsbeispiele erläutert. Darin zeigen:
- Fig. 1: eine seitliche Ansicht eines ersten Ausführungsbeispiels eines Ventils in geschlossenem Zustand,
- Fig. 2: eine vergrößerte Ansicht der in Fig. 1 mit II bezeichneten Einzelheit,
- Fig. 3: eine der Ansicht in Fig. 1 entsprechende Ansicht des Ventils in geöffnetem Zustand,
- Fig. 4: eine vergrößerte Ansicht der in Fig. 3 mit IV bezeichneten Einzelheit,
- Fig. 5: eine der Darstellung in Fig. 1 entsprechende Ansicht eines Ventils gemäß eines zweiten Ausführungsbeispiels,
- Fig. 6: eine vergrößerte Ansicht der in Fig. 5 mit VI bezeichneten Einzelheit,
- Fig. 7: eine der Ansicht in Fig. 5 entsprechende Ansicht des Ventils in geöffnetem Zustand und
- Fig. 8: eine vergrößerte Ansicht der in Fig. 7 mit VIII bezeichneten Einzelheit.

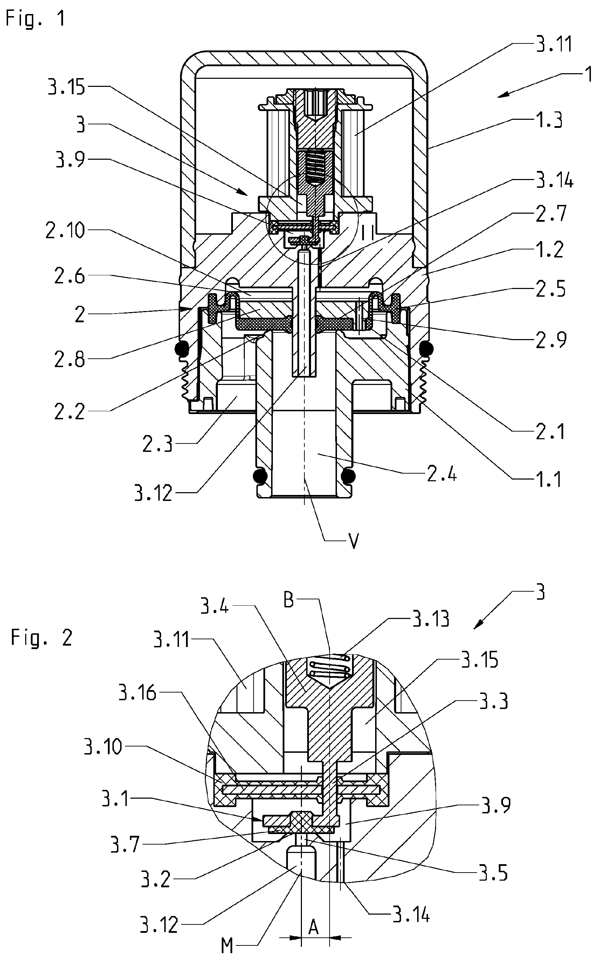

Die Figuren 1 bis 4 zeigen ein erstes Ausführungsbeispiel eines als Kartuschenventil ausgebildeten Ventils 1, bei welchem es sich um ein eigenmediumbetätigtes Servoventil handelt.

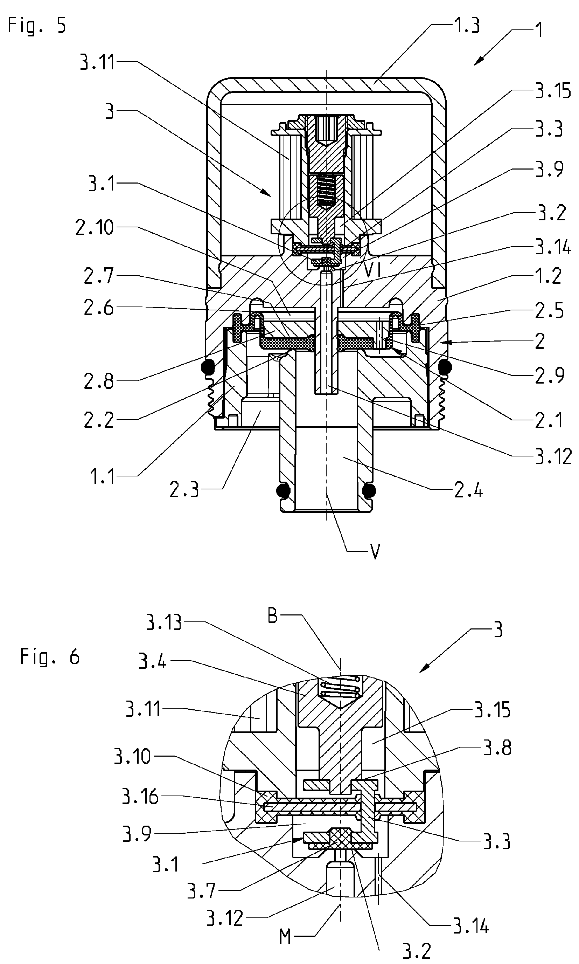

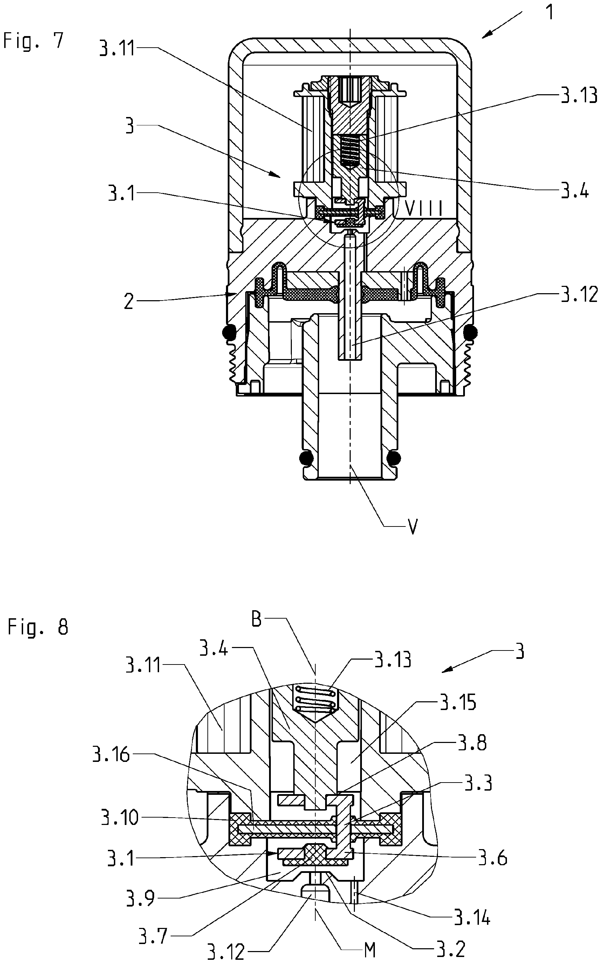

In den Figuren 5 bis 8 ist ein zweites Ausführungsbeispiel eines Ventils 1 dargestellt, welches in vielen Einzelheiten mit dem Ventil 1 gemäß des ersten Ausführungsbeispiels übereinstimmt. Es wird daher nachfolgend zunächst anhand der Darstellungen in den Figuren 1 bis 4 auf gemeinsame Merkmale beider Ausführungen eingegangen, wonach dann auch die Unterschiede zwischen den beiden Ausführungen erläutert werden.

Das Ventil 1 weist ein Hauptventil 2 und ein demgegenüber kleiner ausgebildetes Vorsteuerventil 3 auf, über welches sich das Hauptventil 2 schalten, d. h. öffnen bzw. schließen lässt.

Das Hauptventil 2 weist einen Ventileinlass 2.3 auf, der über einen ringzylindrischen Ventilsitz 2.2 mit einem Ventilauslass 2.4 strömungsverbunden ist. Der radial weiter außen liegende Ventileinlass 2.3 und der radial innen liegende Auslass 2.4 sind koaxial zu einer Hauptventilachse V angeordnet.

In Fig. 1 und Fig. 2 ist das Ventil 1 in dessen Schließstellung dargestellt, in welcher der Ventilsitz 2.2 über ein Schließelement 2.1 abgedichtet ist, so dass der Strömungsweg zwischen dem Ventileinlass 2.3 und dem Ventilauslass 2.4 versperrt und das Ventil 1 geschlossen ist. Bei dem Schließelement 2.1 handelt es sich um eine zumindest teilweise aus einem gummielastischen Material bestehende Membrane. Das Schließelement 2.1 ist in dessen Randbereich 2.5 gegenüber zwei Gehäuseteilen 1.1 und 1.2 des Ventils 1 unter Klemmwirkung dichtend festgelegt. Der Randbereich 2.1 geht nach radial innen über einen als Rollbereich ausgebildeten Übergangsbereich 2.6 in den Mittelbereich 2.7 des Schließelements 2.1 über, welcher zur Abdichtung gegenüber dem Ventilsitz 2.2 dient. Im Mittelbereich 2.7 ist zusätzlich ein Körper 2.8 plattenförmiger Geometrie vorgesehen, welcher oberhalb des Gummimaterials des Schließelements 2.1 angeordnet und zur Versteifung in dieses eingebettet ist.

Über den Einlass 2.3 tritt das Medium unter einem gewissen Druck in das Innere des Hauptventils 2 ein. Über eine an dem Schließelement 2.1 vorgesehene Öffnung 2.9 tritt das Medium in einen Druckraum 2.10 oberhalb des Schließelements 2.1 ein. Der Druckraum 2.10 ist auf der dem Ventilsitz 2.2 gegenüber liegenden Seite des Schließelements 2.1 angeordnet und befindet sich auf dem gleichen Druckniveau wie der Ventileinlass 2.3. Da der Druck innerhalb des Einlasses 2.3 bzw. des Druckraums 2.10 größer ist als jener des Ventilauslasses 2.4, welcher sich im Wesentlichen auf einem atmosphärischen Druckniveau befindet, wird das Schließelement 2.1 unter dem Einfluss des zu schaltenden Mediums in der Schließstellung von oben her dichtend auf den Ventilsitz 2.2 gedrückt. Neben den unterschiedlichen Drücken ist diese Kraft auch von den unterschiedlichen Flächen abhängig, die mit den jeweiligen Drücken beaufschlagt werden.

Zum Öffnen des Hauptventils 2 ist es erforderlich, dass das Schließelement 2.1 von dem Ventilsitz 2.2 abhebt und auf diese Weise den Strömungsweg zwischen dem Ventileinlass 2.3 und dem Ventilauslass 2.4 freigibt. Hierzu werden die Druckverhältnisse innerhalb des Ventils 1 derart geändert, dass der Druck innerhalb des Druckraums 2.10 sinkt, so dass das Schließelement 2.1 unter dem Einfluss des über den Einlass 2.3 von unten her anstehenden Drucks von dem Ventilsitz abhebt.

Hierzu ist das im oberen Bereich des Ventils 1 unter einem deckelartigen Gehäuseteil 1.3 des Ventils 1 angeordnete Vorsteuerventil 3 vorgesehen. Über das Vorsteuerventil 3 lässt sich der Druck innerhalb des Druckraums 2.10 absenken, so dass das Schließelement 2.1 des Hauptventils 2 von dessen Ventilsitz 2.2 abhebt und das Ventil auf diese Weise öffnet.

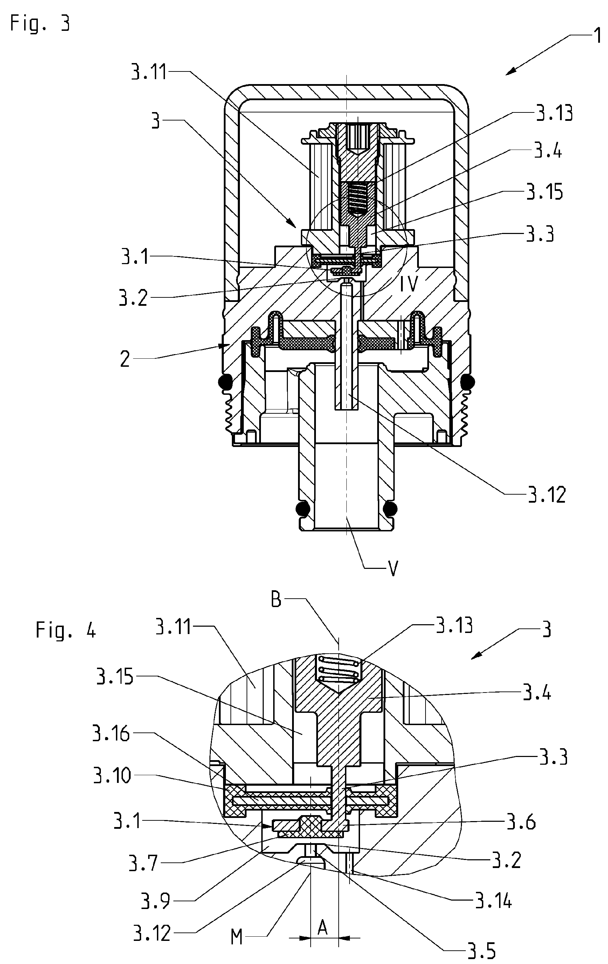

Wie die Darstellung in Fig. 1 erkennen lässt, ist der Druckraum 2.10 über eine Verbindung 3.14 mit einer Vorsteuerventilkammer 3.9 des Vorsteuerventils 3 strömungsverbunden. Auch die Vorsteuerventilkammer 3.9 befindet sich daher auf dem gleichen Druckniveau wie der Druckraum 2.10 des Hauptventils 2. Innerhalb der Vorsteuerventilkammer 3.9 ist ein Schließelement 3.1 des Vorsteuerventils axial bewegbar gegenüber einem Vorsteuerventilsitz 3.2 bewegbar angeordnet (vgl. auch Fig. 2). Durch Anheben des Schließelements 3.1 von dem Vorsteuerventilsitz 3.2 wird der Vorsteuerventilauslass 3.12 in Richtung des Ventilauslasses 2.4 des Hauptventils 2 geöffnet. Hierdurch fällt der Druck innerhalb der Vorsteuerventilkammer 3.9 und damit auch innerhalb des Druckraums 2.10 ab und das Schließelement 2.1 des Hauptventils 2 hebt von dem Ventilsitz 2.2 ab, wodurch sich das Ventil 1 gemäß der Darstellung in den Figuren 3 und 4 öffnet.

Nachfolgend wird auf Einzelheiten des Vorsteuerventils 3 insbesondere anhand der Darstellungen in den Figuren 2 und 4 eingegangen.

Das Vorsteuerventil 3 weist ein Schließelement 3.1 auf, welches zum Öffnen bzw. Schließen des Vorsteuerventils 3 gegenüber einem ringförmigen Vorsteuerventilsitz 3.2 bewegbar innerhalb einer von der von dem Medium durchströmten Vorsteuerventilkammer 3.9 angeordnet ist. Das Schließelement 3.1 ist über ein Koppelelement 3.3 mit einem Betätigungselement 3.4 verbunden. Beim Ausführungsbeispiel gemäß den Figuren 1 bis 4 sind das Schließelement 3.1, das Koppelelement 3.3 und das Betätigungselement 3.4 einstückig miteinander verbunden. Es wäre jedoch auch denkbar, diese Elemente als separate Bauteile auszubilden.

Das Betätigungselement 3.4 ist in axialer Richtung bewegbar ausgebildet, wobei das Schließelement 3.1 den Bewegungen des Betätigungselements 3.4 aufgrund der Kopplung über das Koppelelement 3.3 folgt. Zur Bewegung des Schließelements 3.1 in Richtung dessen Schließstellung ist eine Feder 3.13 vorgesehen, über welche das Schließelement 3.1 in dessen Schließstellung unter dem Einfluss einer Federkraft dichtend gegen den Vorsteuerventilsitz 3.2 anliegt und eine Öffnung 3.5 des Vorsteuerventilsitzes 3.2 abdichtet. Die Feder 3.13 ist als Druckfeder ausgebildet. Die Feder 3.13 ist innerhalb einer Öffnung des Betätigungselements 3.4 angeordnet und drückt dieses von oben her gemeinsam mit dem Koppelelement 3.3 und dem Schließelement 3.1 gegen den Vorsteuerventilsitz 3.2.

Um das Schließelement 3.1 von dem Vorsteuerventilsitz 3.2 abzuheben und damit die Öffnung 3.5 wie auch den Auslass 3.12 des Vorsteuerventils 3 frei zu geben, ist ein Spulensystem 3.11 vorgesehen. Das Spulensystem 3.11 ist mit dem Betätigungselement 3.4 magnetisch gekoppelt, so dass das Betätigungselement 3.4 und mit diesem das Schließelement 3.1 infolge einer Bestromung des Spulensystems 3.11 entgegen der Kraft der Feder 3.13 von der in den Figuren 1 und 2 dargestellten Schließstellung in die in den Figuren 3 und 4 dargestellte Offenstellung überführt wird. Das Betätigungselement 3.4 bildet innerhalb einer Spule des Spulensystems 3.11 eine Art Magnetanker. Das Spulensystem 3.11 ist in Abstimmung mit der Feder 3.13 bistabil ausgelegt, so dass das Betätigungselement 3.4 und mit diesem das Schließelement 3.1 durch kurzzeitige Bestromung von einer stabilen Endlage in die andere überführt wird.

Das Schließelement 3.1 ist von insgesamt plattenförmiger Geometrie und weist ein aus einem gummielastischen Material bestehendes Dichtelement 3.7 und eine oberhalb des Dichtelements 3.7 angeordnete Stützscheibe 3.6 auf, vgl. Fig. 4. Das Dichtelement 3.7 ist von pfropfenförmiger Geometrie und mit der Stützscheibe 3.6 über eine Steckverbindung lösbar verbunden.

Das Koppelelement 3.3 ist von zapfenförmiger Geometrie und erstreckt sich aus der über ein Dichtelement 3.10 abgedichteten Vorsteuerventilkammer 3.9 durch das Dichtelement 3.10 hindurch in einen trockenen Bereich des Vorsteuerventils 3, der nicht vom Medium durchströmt wird. Auch der Plungerraum 3.15, in welchem das Betätigungselement 3.4 bewegbar angeordnet ist, befindet sich in dem trockenen Bereich des Vorsteuerventils 3.

Das Koppelelement 3.3 ist innerhalb einer Öffnung des Dichtelements 3.10 axial bewegbar angeordnet. Das Dichtelement 3.10 weist einen Dichtkörper aus einem gummielastischen Material auf, in welchen eine Stützscheibe 3.16 aus einem härteren Material eingebettet ist.

Das Schließelement 3.1 ist in dessen Randbereich mit dem bolzenförmigen Koppelelement 3.3 verbunden, wobei das Koppelelement 3.3 gegenüber dem Vorsteuerventilsitz 3.2 außermittig angeordnet ist und sich in einem rechten Winkel von dem Schließelement 3.1 nach oben in den abgedichteten Bereich des Vorsteuerventils 3 erstreckt. Durch diese außermittige Anordnung lässt sich der für die Betätigung des Spulensystems 3.11 erforderliche Bedarf an elektrischer Energie gering halten, was nachfolgend noch näher erläutert wird.

Der unterhalb des Schließelements 3.1 vorgesehene Vorsteuerventilsitz 3.2 weist eine die Öffnung 3.5 umgebende, ringförmige Anlagefläche für das Schließelement 3.1 auf. Auf dieser Fläche liegt das Schließelement 3.1 im geschlossenen Zustand mit einer vorgegebenen Schließkraft auf. Das Schließelement 3.1 ist größer als der Vorsteuerventilsitz 3.2 und steht seitlich über den Vorsteuerventilsitz 3.2 herüber. Auf der dem Ventilsitz 3.2 abgewandten Seite wird das Schließelement 3.1 von dem Medium überströmt. In den Seitenbereichen des Schließelements, wo dieses über den Ventilsitz seitlich übersteht, wird es auch von der anderen Seite von dem Fluid unterströmt. In dem Bereich des Schließelements 3.1, welcher auf dem Vorsteuerventilsitz 3.2 aufliegt und von dem Medium überströmt wird, wird das Schließelement 3.1 durch den Druck des Mediums in dessen Schließrichtung auf den Vorsteuerventilsitz 3.2 gedrückt. Denn das Medium in der Vorsteuerventilkammer 3.9 weist einen größeren Druck als der unterhalb des Schließelements 3.1 angeordnete Ventilauslass 3.12 auf und das Schließelement 3.1 wird entsprechend der Druckdifferenz und der Flächendifferenz von oben her auf den Vorsteuerventilsitz 3.2 gedrückt.

Die Kraft, mit welcher das Schließelement 3.1 auf den Vorsteuerventilsitz 3.2 gedrückt wird, hängt wesentlich von der oberhalb des Ventilsitzes 3.2 überströmten Fläche ab, weshalb erfindungsgemäß Maßnahmen getroffen sind, dass diese Fläche frei überströmbar ist. In den Ausführungsbeispielen ist der gesamte Bereich oberhalb des Ventilsitzes 3.2 überströmt, so dass das Schließelement 3.1 mit maximaler Kraft gegen den Vorsteuerventilsitz 3.2 gedrückt wird.

Da das Koppelelement 3.3 nicht vom Medium überströmt wird, sondern sich nach oben in den trockenen, sich auf einem atmosphärischen Druckniveau befindenden Bereich des Vorsteuerventils 3 erstreckt, ist dieses außermittig zu dem Vorsteuerventilsitz 3.2 angeordnet, um die oberhalb des Ventilsitzes 3.2 auf dem Schließelement 3.1 überströmte Fläche nicht zu verringern. Zudem ist der Querschnitt des Koppelelements 3.3 kleiner als die Fläche des Ventilsitzes 3.2. Denn durch das unter dem Koppelelement 3.3 strömende Fluid wird auch eine gewisse der Schließkraft entgegen wirkende Kraft auf das Koppelelement 3.3 ausgeübt. Um diese gering zu halten, sind die Querschnittsverhältnisse derart gewährt, dass die oberhalb des Ventilsitzes 3.2 überströmte Fläche größer, vorteilhaft mindestens 2-mal, noch vorteilhafter mindestens 5-mal so groß wie der Querschnitt des Koppelelements 3.3 ist.

Während die vorstehenden Einzelheiten für beide in den Figuren dargestellten Ausführungsbeispiele gleichermaßen gelten, so ergeben sich jedoch Unterschiede im Hinblick auf die Anordnung des Betätigungselements 3.4 gegenüber dem Vorsteuerventilsitz 3.2.

Bei der ersten Ausführung gemäß den Figuren 1 bis 4 ist die Betätigungsachse B des Betätigungselements 3.4 versetzt gegenüber der Mittelachse M des Vorsteuerventilsitzes 3.2 angeordnet. Das Koppelelement 3.3 ist koaxial zur Betätigungsachse B des Betätigungselements 3.4 angeordnet. Sowohl das Koppelelement 3.3 als auch das Betätigungselement 3.4 weisen einen Achsversatz A gegenüber der Mittelachse M des Vorsteuerventilsitzes 3.2 auf. Aufgrund des Achsversatzes A lässt sich das Koppelelement 3.3 außermittig neben dem Vorsteuerventilsitz 3.2 anordnen.

Bei der zweiten Ausführung gemäß den Figuren 5 bis 8 ist die Betätigungsachse B des Betätigungselements 3.4 koaxial zu der Mittelachse M des Vorsteuerventilsitzes 3.2 angeordnet. Das Koppelelement 3.3 ist sowohl gegenüber der Betätigungsachse B des Betätigungselements 3.4 als auch gegenüber der Mittelachse M des Vorsteuerventilsitzes 3.2 versetzt angeordnet. Das Koppelelement 3.3 weist einen Achsversatz A gegenüber der Betätigungsachse B und der Mittelachse M auf, welcher dem in dem ersten Ausführungsbeispiel dargestellten Achsversatz A entspricht. Zur Verbindung des Koppelelements 3.3 ist bei dieser Ausführung ein Verbindungselement 3.8 vorgesehen, welches auf Seiten des Betätigungselements 3.4 den Achsversatz A überbrückt und das Koppelelement 3.3 mit dem Betätigungselement 3.4 verbindet. Das Verbindungselement 3.8, das Koppelelement 3.3 und das Schließelement 3.1 weisen eine im Querschnitt U-förmige Geometrie auf. Ein Schenkel dieses Us befindet sich in der Vorsteuerventilkammer 3.9, der andere innerhalb des trockenen Bereichs des Vorsteuerventils 3. Das den Mittelschenkel des Us bildende Koppelelement 3.3 ist wie vorstehend beschrieben axial bewegbar durch das Dichtelement 3.10 hindurch geführt.

In beiden Ausführungen wird durch die außermittige Anordnung des Koppelelements 3.3 gegenüber dem Vorsteuerventilsitz 3.2 eine große Fläche zur Nutzung des Drucks des Medium erzeugt.

Die hieraus resultierende Kraft addiert sich zu der Kraft der Feder 3.13, die insoweit kleiner dimensioniert werden kann. Die beim Öffnen des Vorsteuerventils 3 von dem Spulensystem 3.11 zu überwindende Federkraft ist daher geringer und es ergibt sich ein geringerer Energiebedarf. Bei Verwendung von Batterien als Träger der elektrischen Energie ergeben sich deutlich längere Wechselintervalle.

### Bezugszeichen:

- 1: Ventil
- 1.1: Gehäuseteil
- 1.2: Gehäuseteil
- 1.3: Deckel
- 2: Hauptventil
- 2.1: Schließelement
- 2.2: Ventilsitz
- 2.3: Ventileinlass
- 2.4: Ventilauslass
- 2.5: Randbereich
- 2.6: Übergangsbereich
- 2.7: Mittelbereich
- 2.8: Körper
- 2.9: Öffnung
- 2.10: Druckraum
- 3: Vorsteuerventil
- 3.1: Schließelement
- 3.2: Vorsteuerventilsitz
- 3.3: Koppelelement
- 3.4: Betätigungselement
- 3.5: Öffnung
- 3.6: Stützscheibe
- 3.7: Dichtelement
- 3.8: Verbindungselement
- 3.9: Vorsteuerventilkammer
- 3.10: Dichtelement
- 3.11: Spulensystem
- 3.12: Vorsteuerventilauslass
- 3.13: Feder
- 3.14: Öffnung
- 3.15: Plungerraum
- 3.16: Stützscheibe

- B: Betätigungsachse
- M: Mittelachse
- V: Hauptventilachse
- A: Achsversatz

## Patentansprüche

1. Ventil, insbesondere Servoventil, mit einem zum Schalten eines Hauptventils (2) vorgesehen Vorsteuerventil (3), das einen über ein axial bewegbar angeordnetes Schließelement (3.1) verschließbaren Vorsteuerventilsitz (3.2) aufweist, wobei das Schließelement (3.1) über ein Koppelelement (3.3) mit einem Betätigungselement (3.4) gekoppelt ist, **dadurch gekennzeichnet,**
**dass** das Koppelelement (3.3) außermittig gegenüber dem Vorsteuerventilsitz (3.2) angeordnet ist.

2. Ventil nach Anspruch 1, **dadurch gekennzeichnet, dass** das Koppelelement (3.3) neben der Mittelachse (M) des Vorsteuerventilsitzes (3.2) angeordnet ist.

3. Ventil nach Anspruch 1 oder Anspruch 2, **dadurch gekennzeichnet, dass** das Koppelelement (3.3) neben der Öffnung (3.5) des Vorsteuerventilsitzes (3.2) angeordnet ist.

4. Ventil nach einem der vorhergehenden Ansprüche, **dadurch gekennzeichnet, dass** das Koppelelement (3.3) neben dem Vorsteuerventilsitz (3.2) angeordnet ist.

5. Ventil nach einem der vorhergehenden Ansprüche, **dadurch gekennzeichnet, dass** das Schließelement (3.1) eine scheibenförmige Geometrie aufweist.

6. Ventil nach einem der vorhergehenden Ansprüche, **dadurch gekennzeichnet, dass** das Koppelelement (3.3) in einem Randbereich des Schließelements (3.1) angeordnet ist.

7. Ventil nach einem der vorhergehenden Ansprüche, **dadurch gekennzeichnet, dass** das Schließelement (3.1) eine Stützscheibe (3.6) und ein Dichtelement (3.7) aufweist.

8. Ventil nach Anspruch 7, **dadurch gekennzeichnet, dass** das Koppelelement (3.3) an der Stützscheibe (3.6) angeordnet ist.

9. Ventil nach einem der vorhergehenden Ansprüche, **dadurch gekennzeichnet, dass** das Koppelelement (3.3) mit dem Betätigungselement(3.4) und dem Schließelement (3.1) einstückig verbunden ist.

10. Ventil nach einem der vorhergehenden Ansprüche, **dadurch gekennzeichnet, dass** die Betätigungsachse (B) des Betätigungselements (3.4) versetzt gegenüber der Mittelachse (M) des Vorsteuerventilsitzes (3.2) angeordnet ist.

11. Ventil nach Anspruch 10, **dadurch gekennzeichnet, dass** das Betätigungselement (3.4) und das Schließelement (3.1) quer zueinander ausgerichtet sind.

12. Ventil nach einem der Ansprüche 1 bis 9, **dadurch gekennzeichnet, dass** die Betätigungsachse (B) des Betätigungselements (3.4) mit der Mittelachse (M) des Vorsteuerventilsitzes (3.2) fluchtet.

13. Ventil nach Anspruch 12, **dadurch gekennzeichnet, dass** das Koppelelement (3.3) über ein sich von dem Koppelelement (3.3) in Richtung des Betätigungselements (3.4) erstreckendes Verbindungselement (3.8) mit dem Betätigungselement (3.4) verbunden ist.

14. Ventil nach Anspruch 13, **dadurch gekennzeichnet, dass** das Koppelelement (3.3) gemeinsam mit dem Schließelement (3.1) und dem Verbindungselement (3.8) einen U-förmigen Querschnitt aufweist.

15. Ventil nach einem der vorhergehenden Ansprüche, **dadurch gekennzeichnet, dass** das Schließelement (3.1) innerhalb einer Vorsteuerventilkammer (3.9) bewegbar angeordnet ist.

16. Ventil nach Anspruch 15, **dadurch gekennzeichnet, dass** die Vorsteuerventilkammer (3.9) über ein Dichtelement (3.10) abgedichtet und das Koppelelement (3.3) durch das Dichtelement (3.10) hindurch geführt ist.

17. Ventil nach einem der vorhergehenden Ansprüche, **dadurch gekennzeichnet, dass** das Betätigungselement (3.4) ein bistabil angeordneter Plunger ist, der über ein Spulensystem (3.11) und eine Feder (3.12) zwischen zwei Endlagen hin und her schaltbar ist.

18. Ventil nach Anspruch 17, **dadurch gekennzeichnet, dass** das Betätigungselement (3.4) außerhalb der Vorsteuerventilkammer (3.9) in einem trockenen Bereich des Vorsteuerventils (3) angeordnet ist.
